**Europäisches Patentamt**

**European Patent Office**

**Office européen des brevets**

(19)

(11) Veröffentlichungsnummer : **0 436 696 B1**

(12) # EUROPÄISCHE PATENTSCHRIFT

(45) Veröffentlichungstag der Patentschrift :
**15.12.93 Patentblatt 93/50**

(51) Int. Cl.⁵ : **B01D 53/34**

(21) Anmeldenummer : **90911272.4**

(22) Anmeldetag : **27.07.90**

(86) Internationale Anmeldenummer :
**PCT/AT90/00075**

(87) Internationale Veröffentlichungsnummer :
**WO 91/01792 21.02.91 Gazette 91/05**

(54) **VERFAHREN ZUR ENTFERNUNG BZW. VERMINDERUNG VON GASFÖRMIGEN SCHADSTOFFEN.**

(30) Priorität : **28.07.89 AT 1835/89**

(43) Veröffentlichungstag der Anmeldung :
**17.07.91 Patentblatt 91/29**

(45) Bekanntmachung des Hinweises auf die
Patenterteilung :
**15.12.93 Patentblatt 93/50**

(84) Benannte Vertragsstaaten :
**AT DE ES**

(56) Entgegenhaltungen :
**AT-B- 380 406**
**AT-B- 385 210**
**DE-A- 2 615 828**
**GB-A- 2 162 162**

(73) Patentinhaber : **Staudinger, Gernot, Dipl.-Ing.**
**Dr.**
**Messendorfberg 99**
**A-8042 Graz (AT)**

(72) Erfinder : **STAUDINGER, Gernot**
**Messendorfberg 99**
**A-8042 Graz (AT)**
Erfinder : **KRAMMER, Gernot**
**Pensionweg 12**
**A-8043 Graz (AT)**

(74) Vertreter : **Casati, Wilhelm, Dipl.-Ing. et al**
**Patentanwälte Casati, Wilhelm, Dipl.-Ing. Itze,**
**Peter, Dipl.-Ing. Amerlingstrasse 8**
**A-1061 Wien (AT)**

EP 0 436 696 B1

Jouve, 18, rue Saint-Denis, 75001 PARIS

## Beschreibung

Die Entfernung von Schadstoffen aus den Abgasen der Industrie, insbesondere aus Abgasen der Verbrennungsprozesse, wird aus Grunden des Umweltschutzes immer dringender. Die "sauren" Gase NO, $NO_2$, $SO_2$, $SO_3$, HCl und HF sind Hauptverursacher des sauren Regens. Die höchstzulässige Emission dieser Gase ist durch Gesetze geregelt. Mit Ausnahme der Stickstoffverbindungen werden die anderen Gase durch Sorption und meist durch nachfolgende chemische Reaktion mit einem basischen Stoff, z.B. einer Ca-Verbindung, aus dem Rauchgas entfernt. Die Anzahl der Verfahren mit $SO_2$-Gewinnung ist in der Minderheit. Wegen der einfachen Handhabung sind trockene Adsorbentien sehr begehrt. Das bekannteste trockene Adsorbens ist wohl Aktivkohle, aber auch $Ca(OH)_2$, $CaCO_3$, CaO und $NaHCO_3$ werden verwendet, wobei letztere auch mit dem adsorbierten Gas chemisch reagieren. R. Rasch, Entwicklungsstand der trockenen Heißreinigung von Rauchgasen", in Maschinenmarkt Würzburg 85 (1979) 32, S 620-623, gibt einen Uberblick über den Stand der Technik.

Da nun die meisten dieser Stoffe als Adsorbens und als Reaktand wirken, spricht man von "Chemisorption". Der Nachteil all dieser Chemisorbentien liegt darin, daß in der technisch zur Verfügung stehenden Reaktionszeit, sich nur eine relativ dünne Produktschicht an der Oberfläche der Sorbenspartikel ausbildet, der Kern jedoch ungenutzt bleibt. Dieser Nachteil wird durch eine große spezifische Oberfläche vermindert, aber nicht beseitigt.

Es wurde darum versucht, die Reaktionsgeschwindigkeit zwischen den gasförmigen Schadstoffen und den meist alkalischen Sorbentien durch Erhohen der relativen Feuchte mittels Wassereinspritzung in die heilen Rauchgase zu verbesern (Nolan, P.S., Hendriks, R.V. und Kresovich, N., "Operation of the LIMB/Humidifier Demonstration Unit at Edgewater (104 MWel)" First Combined FGD and Dry $SO_2$ Control Symposium Oct. 25-28, 1988, St. Louis USA, paper Nr. 4A-1) und zusätzlich auch noch die Verweilzeit durch Umlenkung des Rauchgasstromes zu verlängern (Kenakka T., "Status of the LIFAC Process" First Combined FGD and Dry $SO_2$ Control Symposium Oct. 25-25, 1988, St. Louis USA, paper Nr. 4A-3). Eine nennenswerte Verbesserung der Ausnutzung der festen Sorbentien und des Entschwefelungsgrades ist aber nur dann erirreichbar, wenn die Temperatur des Rauchgases bis nahe zum Wassertaupunkt abgesenkt wird.

Es gibt darum eine Reihe von Verfahrensvorschlägen zur Verbesserung des Umsatzes der Adsorbenspartikel durch mehrfachen Einsatz, d.h. Rezyklieren der einmal verwendeten Fartikel zu einer Wiederholung des Vorganges. In der Regel wird dabei ein Schritt zur Aktivierung" des Additives dazwischengeschaltet.

So wird in der DE- 26 15 828 vorgeschlagen, die festen Sorptionsmittel über Venturistrecken mit dem zu reinigenden Gasstrom zu mischen, sodann von diesem abzutrennen und erneut in den Gasstrom einzuführen. Zur Verbesserung der Sorption soll dem Gas vor dem Kontakt Wasserdampf zugesetzt werden; auch soll der Zusatz von Oxidationsmitteln förderlich sein. Das Rohgas soll eine Temperatur von mindestens 120° C aufweisen.

Durch die DE-A- 26 32 502 wurde ein Verfahren zur Verbesserung der Ad- und/oder Absorption bzw. Chemisorption bei der Entfernung von Schadstoffen aus Rauchgasen bekannt, bei welchem der Adsorbensstaub nach dem Abscheider aufgefangen, auf maximal 10 % Feuchte benetzt und sodann wiederum der Anlage zugeführt wird. Die Feuchte soll vorzugsweise zwischen 4 und 8 % liegen, um ein Inkrustieren an fosten Wänden zu vermeiden. Die Auffeuchtung kann durch Kühlluft oder durch Kühlung der Wände der Apparatur erreicht werden.

In der DE- 29 10 537 wird zur Regenerierung von trockenen Rückständen aus Abgasreinigungssystemen vorgeschlagen, die festen Rückstände zu zerkleinern und anschließend direkt dem Reaktionssystem zuzuführen, so daß die durch das Zerkleinern an den Bruchflächen entstehenden Valenzen mit den Schadstoffen reagieren können, bevor sie anders abgesättigt werden. Dieser Vorschlag benötigt einen Zerkleinerungsaufschlußprozeß, um den noch reaktionsfähigen Kern der festen Sorptionsmittel freizulegen.

Die DE- 29 34 109 bezieht sich auf ein Verfahren, bei dem die festen Rückstände eines Verbrennungsprozesses fein aufgemahlen und wieder in die Reaktionsstufen des Rauchweges eingeblasen werden. Auch hier wird durch mechanisches Zerkleinern getrachtet, die Oberflache des Feststoffes so weit wie möglich zu vergrößern.

Gemäß der DE-A- 31 13 788 A1 wird das nicht vollständig ausgenutzte Sorptionsmittel aus einer Trockenentschwefelung gemahlen und einer nassen Entschwefelungsanlage zugeführt, um so eine höchstmögliche Nutzung des Sorptionsmittels bei gleichzeitig hohem Entschwefelungsgrad zu erzielen.

Die DE- 31 23 064 schlägt zur Verbesserung der Ausnutzung des Chemisorptionsmittels vor, daß dieses nach dem Durchgang durch die Sorptionsanlage vor der Rückführung in die Anlage mit einer Dampfstrahlmühle aufgearbeitet wird. Dabei wird angenommen, daß in der Dampfstrahlmühle nicht nur durch Zerkleinern neue Oberflächen entstehen, sondern daß diese neuen Oberflächen auch durch Befeuchtung aktiviert werden.

Auch in der AT-C- 385 210 wird ein Verfahren beschrieben, mit dessen Hilfe einmal benutzte Absorptionsmittel aus einem trockenen Rauchgasentschwefelungsverfahren - auch wenn sie gemeinsam mit der Asche des Brennstoffes abgeschieden wurden - für einen zweiten Durchgang mit besserer Ausnutzung aktiviert werden können. Die Aktivierung dieser "sekundären" Adsorptionsmittel geschieht mit Wasser und/oder Wasserdampf. Ein mechanisches Aufmahlen verbessert die Aktivierung weiter. Die so aktivierten Feststoffe werden dem zu entschwefelnden Rauchgas bei vorzugsweise 100 - 700° C beigegeben.

Gemäß der US-A- 4 724 130 wird dem festen Sorbens ein Promotor beigegeben, um solcherart die Wirkung zu verbessern. Durch Waschen der abgeschiedenen und auszuschleusenden Feststoffe läßt sich der offensichtlich teure oder in der Deponie gefährliche Promotor mit dem Waschwasser wiedergewinnen, welches dann in den Rauchgaskanal eingebracht wird. Das Sorbens selbst wird zum Teil und trocken zurückgeführt.

In der AT-C- 380 406 wird ein Verfahren beschrieben, in dem das Kalkaddivitv, das zum Entschwefeln in einen Feuerraum eingebracht wurde, von den Verbrennungsgasen abgetrennt, zerkleinert und nach Behandlung mit trockenem Wasserdampf in den Rauchgasstrom rückgeführt wird.

Es gibt also eine Reihe von Vorschlagen zur Regenerierung/Aktivierung von einmal benutzten festen Sorbentien, ob diese nun wie beim Kalk-Additiv-Verfahren (österr. Patentanmeldung A 2935/83 und AT-C- 385 210) in den Feuerraum eines Dampferzeug eingebracht wurden oder in den bereits abgekühlten Rauchgasstrom. Allen diesen Verfahren haftet ein Nachteil an. Entweder ist eine Mühle für den mechanischen Aufschlu erforderlich, oder das zu regenerierende Sorbens muß angefeuchtet werden. Wieder ein anderes Verfahren verlangt dazu eine Rauchgastemperatur über 100° C, ein anderes schreibt die Abkühlung des Rauchgases auf $T_p + 5°C < T < T_p + 50°C$ vor, wobei T die Rauchgastemperatur und $T_p$ den Wassertaupunkt des Rauchgases bedeuten.

Es wurde aun überraschend gefunden, daß ein Sorbens, insbesondere Kraftwerksasche, die ungenutztes CaO aus dem kalk-Additiv-Verfahren (d.h. Einbringung von $CaCO_3$-Pulver in den Feuerraum) enthält, einfach dadurch wieder reaktionsfähig gemacht werden kann, daß man das Sorbens in einem Wirbelschichtreaktor einer Behandlung mit trockenem Wasserdampf unterzieht, und daß dabei die Temperatur des Sorbens beim Eintritt in den Wirbelschichtreaktor niedriger als der Taupunkt des Wasserdampfes (d.h. bei 1 bar Wasserdampfdruck unter 100° C) liegt. Die Temperatur des Wasserdampfes sollte nicht mehr als 50° C über dem Taupunkt liegen. Bei Atmosphärendruck beträgt die Temperatur des Sorbens vor dem Eintrag vorzugsweise 50 - 100° C, die Dampftemperatur vorzugsweise 105 - 135° C. Es ist aber auch möglich, den Taupunkt durch Betreiben der Wirbelschicht unter einem anderen als Atmosphärendruck oder durch Verdünnung des Dampfes mit Luft oder einem inerten Gas zu verschieben. Ein mechanischer Mahlvargang oder eine Benetzung mit Wasser oder feuchtem Dampf ist nicht erforderlich.

Das auf diese Weise aktivierte Sorbens, insbesondere Asche, wird dem Rauchgasstrom bei einer nach wirtschaftlichen Gesichtspunkten optimalen Rauchgastemperatur beigemischt, die zwischen 65 und 150° C liegen soll. Je niedriger die Rauchgastemperatur ist, umso besser ist die Wirkung.

Als Sorbens kann anstelle oder auch zusätzlich zur bereits erwahnten Kraftwerksasche Aktivkohle, allgemein ein mit dem Schadstoff reaktionsfähiges, feinporiges Material eingesetzt werden. Die Porengröße ist dabei kleiner als 10 μm.

Die Erfindung wird nachstehend anhand von in der Zeichnung beispielsweise dargestellten Anlagen zur Entfernung von gasförmigen Schadstoffen aus Rauchgasen, in welchen das erfindungsgemäße Verfahren ausgeführt werden kann, naher erläutert . Es zeigen die

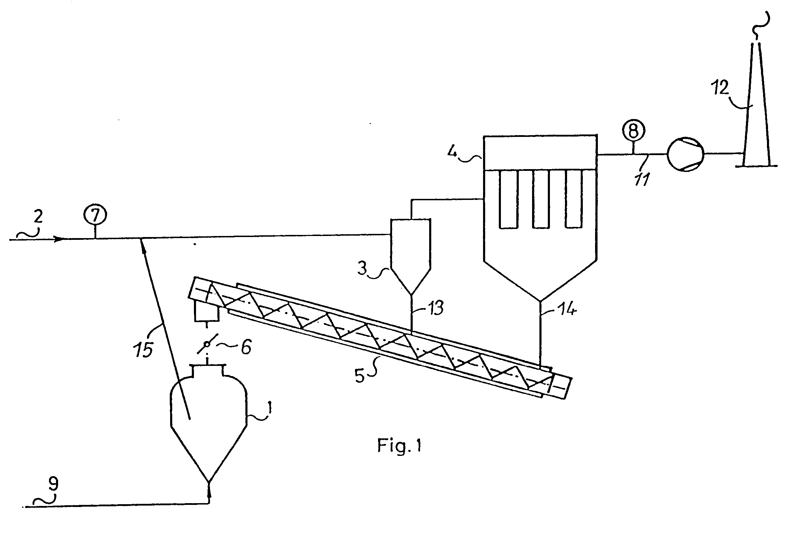

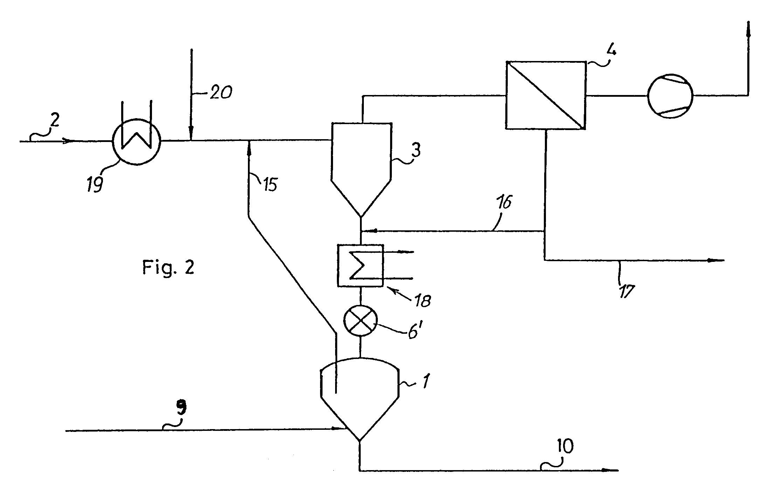

Fig. 1 und 2 schematisch zwei derartige Anlagen.

Gemäß der in Fig. 1 dargestellten, als Versuchsanlage betreibbaren Anlage wird Kraftwerksasche mit einem Ca-Gehalt von 17,5 Gew.-% abwechselnd in einem Wirbelschichtreaktor 1 mit Wasserdampf, der dem Reaktor über eine Leitung 9 zugeführt wird, behandelt und in einem Rauchgasweg 2 mit $SO_2$-haltigem Rauchgas in Kontakt gebracht. Nachdem das Rauchgas mit dem Sorbens im Rauch- gasweg 2 in Kontakt gebracht wurde, wird das Gas einem Vorabscheider 3 und einem z.B. als Tuchfilter ausgebildeten Staubabscheider 4 zwecks Abscheidens der Asche zugeführt. Das gereinigte Rauchgas gelangt über eine Leitung 11 in den Kamin 12. Die im Vorabscheider 3 und dem Staubabscheider 4 abgeschiedene Asche wird über Leitungen 13, 14 einem heiz- und auch kühlbaren Schnekkenförderer 5 zugeführt, aus welchem die Asche schließlich über eine Schleuse 6 in den Wirbelschichtreaktor 1 gelangt. Dort wird die Wirbelschicht durch einen über die Leitung 9 zugeführten Dampfstrom aufrechterhal- ten. Bei einem Versuch hat die Temperatur der Asche vor der Schleuse 6 92° C betragen. Im Rauchgasweg befindet sich vor der Stelle, an welcher über eine Leitung 15 das Sorbens in den Rauchgasweg 2 eingeführt wird, eine Meßstelle 7. Eine weitere Meßstelle 8 befindet sich in der vom Staubabscheider 4 zum Kamin 12 ausgehenden Leitung 11.

Versuchsergebnisse

| Dampf-temp. Wirbel-sch. °C | Rauch-gas-temp. °C | Asche-temp.vor Eintrag °C | Asche-beladung $g/m^3$ i.n. | $SO_2$-Kon-zentr. Meßstelle 7 $mg/m^3$ i.n. $0\%\ O_2$ | $SO_2$-Kon-zentr. Meßst. 8 $mg/m^3$ i.n. $0\%\ O_2$ |
|---|---|---|---|---|---|
| 127 | 95 | 90 | 400 | 2200 | 200 |
| 126 | 100 | 92 | 400 | 2300 | 400 |
| 131 | 110 | 93 | 600 | 1950 | 550 |

Bei dem Ausfuhrungsbeispiel gemäß Fig. 2 wird Sorbens, das im Wirbelschichtreaktor 1 behandelt wurde, über eine Förderleitung 15 ausgetragen und dem Rauchgasstrom 2 beigemischt. Im Vorabscheider 3 wird der größte Teil des Sorbens abgeschieden und fließt zurück in den Wirbelschichtbehälter 1. Der Rest des Sorbens wird im Staubabscheider 4 abgeschieden. Ein Teil davon wird in den Wirbelschichtbehälter 1 über eine Leitung 16 gefördert, der Rest wird über eine Leitung 1 ausgeschleust. Weiters kann verbrauchtes Sorbens noch über eine vom Wirbelschichtbehälter 1 abgehende Leitung 10 ausgeschleust werden. Frisches Sorbens wird entweder mit dem Rauchgasstrom 2 angeliefert (z.B. Ca-haltige Kraftwerksasche) oder dem Rauchgas 2 beigegeben. Auch ein Eintrag über die Leitung 16 ist denkbar.

Die Einschleusung von Asche mit einer Temperatur unter der Taupunkttemperatur des Dampfes in die Wirbelschicht ist technisch nicht einfach. Ein Zellenrad 6' mit Heißluftspülung hat sich dabei bestens bewährt. Es kann sich als notwendig erweisen, daß bei höherer Rauchgastemperatur das Sorbens zwischen dem Abscheider 3 und der Einschleusung in den Wirbelschichtbehälter 1 gekühlt werden muß. Die Kühlung kann durch einen Wärmetauscher 18 erfolgen, der vor der Schleuse (Zellenrad 6') angeordnet ist. Durch den Wärmetauscher 18 wird Warme gewonnen.

Es ist wärmewirtschaftlich von besonderem Interesse, das Ratichgas 2 vor der Beigabe des Sorbens auf eine möglichst niedrige Temperatur zu kühlen. Hiezu ist ein Wärmetauscher 19 vorgesehen, aus dem auch Warme gewonnen wird. Da aber mit immer niedriger werdender Temperatur die Austauschflächen immer größer und die gewonnene Warme immer niederwertiger wird, sind der Warmegewinnung wirtschaftliche Grenzen gesetzt. In vielen Fällen wird es wirtschaftlich attraktiv sein, einen Teil der Rauchgaskühlung durch Wassereinspritzung zu bewerkstelligen Als Zerstäuberdüsen sind jedenfalls Zweistoffdüsen zu verwenden, die das Wasser mit Druckluft oder Dampf zerstäuben. Die Zuleitung zur Speisung der Düsen ist in Fig. 2 mit 20 bezeichnet.

Auch andere Anlagenschemata sind denkbar. Wichtig ist, daß die Asche mit einer Temperatur unter dem Taupunkt des Dampfes in den Behandlungsapparat (Wirbeschichtreaktor 1) gebracht wird und der Dampf in diesem trocken ist, seine Temperatur aber nicht mehr als 60° C über dem Taupunkt liegt.

Kraftwerksasche ist Flugasche, z.B. aus Kohlefeuerungen, vor allem Braunkohlefeuerungen, Müllverbrennungsanlagen, jedoch auch aus Ölfeuerungen, soferne dort ein Adsorbens, wie $CaCO_3$ oder ähnliches, hinzudosiert wurde.

## Patentansprüche

1. Verfahren zur Entfernung bzw. Verminderung von gasförmigen Schadstoffen, insbesondere $SO_2$, $SO_3$, HCl oder HF, aus Rauchgasen durch Chemisorption, wobei ein festes, feinkörniges Sorbens vor Inkontaktbringung mit dem Rauchgas in einem Reaktor mit Wasserdampf behandelt wird, dadurch gekennzeichnet, daß das Sorbens vor Eintritt in den Reaktor auf eine Temperatur, von vorzugsweise 10 bis 50° C, unterhalb der Taupunktstemperatur des Wasserdampfes in den Reaktor gebracht wird und in dem Reaktor durch Zufuhr von trockenem Wasserdampf, dessen Temperatur nicht höher als 60° C über der Taupunktstemperatur ist, vorzugsweise 10 bis 40° C über der Taupunktstemperatur liegt, mit Wasserdampf in Kontakt gebracht wird.

2. Verfahren nach Anspruch 1, dadurch gekennzeichnet, daß als Sorbens kalziumhaltige Kraftwerksasche eingesetzt wird.

3. Verfahren nach Anspruch 1, dadurch gekennzeichnet, daß Aktivkohle als Sorbens eingesetzt wird.

4. Verfahren nach Anspruch 1, dadurch gekennzeichnet, daß ein mit dem Schadstoff reaktionsfähiges, feinporiges Material als Sorbens eingesetzt wird.

5. Verfahren nach einem der Ansprüche 1 bis 4, dadurch gekennzeichnet, daß das feste Sorbens, nachdem das Rauchgas behandelt wurde, von den Rauchgasen getrennt und erneut aufbereitet wird.

6. Verfahren nach einem der Ansprüche 1 bis 5, dadurch gekennzeichnet, daß verbrauchtes Sorbens aus dem Reaktor abgezogen wird.

7. Verfahren nach einem der Ansprüche 1 bis 6, dadurch gekennzeichnet, daß das Sorbens vor Einschleusung in den Reaktor gekühlt wird.

8. Verfahren nach einem der Ansprüche 1 bis 7, dadurch gekennzeichnet, daß der Taupunkt im Reaktor (1) durch einen höheren Wasserdampfdruck angehoben oder durch Verdünnen des Wasserdampfes mit Luft oder einem inerten Gas abgesenkt wird.

9. Vorrichtung zur Durchführung eines Verfahrens nach einem der Ansprüche 1 bis 8, mit einer den Reaktor (1) mit dem Rauchgasweg (2) verbindenden Sorbensförderleitung (15), einem im Rauchgasweg nach der Einmündung der Sorbensförderleitung (15) angeordneten Staubabscheider (4), dem gegebenenfalls ein Sorbensvorabscheider (3) vorgeschaltet ist, der der Einmündungsstelle des Sorbens im Rauchgasweg (2) nachgeschaltet ist, dadurch gekennzeichnet, daß der Reaktor (1), in welchem die Behandlung des Sorbens erfolgt, ein Wirbelbett enthalt, dessen Fluidisierungsmedium der Wasserdampf für die Behandlung des Sorbens ist.

10. Vorrichtung nach Anspruch 9, dadurch gekennzeichnet, daß dem Wirbelschichtreaktor (1) ein mit Luft gespültes Zellenrad (6') vorgeschaltet ist, über welches das aus den Rauchgasen abgezogene Sorbens dem Wirbelschichtreaktor (1) zuführbar ist (Fig. 2).

11. Vorrichtung nach Anspruch 10, dadurch gekennzeichnet, daß in Strömungsrichtung des Rauchgases, der Einmündungsstelle des aufbereiteten Sorbens nachgeschaltet, ein Vorabscheider (3) für das Sorbens in einem höheren Niveau als der Wirbelschichtreaktor (1) angeordnet ist, um diesem unter Ausnutzung der Schwerkraft im Vorabscheider (3) abgeschiedenes Sorbens zuzuführen.

12. Vorrichtung nach Anspruch 10 oder 11, dadurch gekennzeichnet, daß an der tiefsten Stelle des Wirbelschichtreaktors (1) ein Ablaß für verbrauchtes Sorbens angeordnet ist (Fig. 2).

13. Vorrichtung nach einem der Ansprüche 9 bis 12, dadurch gekennzeichnet, daß in der Rauchgasleitung (2), insbesondere vor der Einführstelle des Sorbens, ein Berührungskühler (19) angeordnet ist.

14. Vorrichtung nach Anspruch 13, dadurch gekennzeichnet, daß in die Rauchgasleitung (2) zwischen dem Berührungskühler (19) und der Einführstelle des Sorbens, Einspritzdüsen für Kühlwasser angeordnet sind.

15. Vorrichtung nach Anspruch 14, dadurch gekennzeichnet, daß die Einspritzdüsen als Zweistoff-Zerstäuberdüsen ausgebildet sind, die mit Wasser und als zweitem Stoff mit Dampf oder Druckluft beaufschlagbar sind.

16. Vorrichtung nach einem der Ansprüche 9 bis 14, dadurch gekennzeichnet, daß der Dampf, welcher dem Wirbelschichtreaktor (1) zugeführt wird, in einer Verbindungsleitung (15) zwischen dem Wirbelschichtreaktor (1) und der Rauchgasleitung (2) das im Wirbelschichtreaktor (1) aufbereitete Sorbens in die Rauchgasleitung (2) fördert.

**Claims**

1. Process for removing or decreasing gaseous pollutants, in particular $SO_2$, $SO_3$, HCl or HF, from flue gases by chemisorption, in which a solid, fine-grained sorbent, before being brought into contact with the flue gas, is treated with steam in a reactor, characterized in that the sorbent, before entry into the reactor, is brought to a temperature, preferably of 10 to 50°C, below the dew point temperature of the steam in the reactor and is brought into contact with steam in the reactor by feeding in dry steam, the temperature of which is not more than 60°C above the dew point temperature, preferably 10 to 40°C above the dew point temperature.

2. Process according to Claim 1, characterized in that the sorbent used is calcium-containing power station ash.

3. Process according to Claim 1, characterized in that activated charcoal is used as sorbent.

4. Process according to Claim 1, characterized in that a finely porous material which can react with the pollutant is used as sorbent.

5. Process according to one of Claims 1 to 4, characterized in that the solid sorbent, after the flue gas has been treated, is separated from the flue gases and again processed.

6. Process according to one of Claims 1 to 5, characterized in that used sorbent is withdrawn from the reactor.

7. Process according to one of Claims 1 to 6, characterized in that the sorbent, before injection into the reactor, is cooled.

8. Process according to one of Claims 1 to 7, characterized in that the dew point in the reactor (1) is elevated by a higher steam pressure or is lowered by dilution of the steam with air or an inert gas.

9. Apparatus for carrying out a process according to one of Claims 1 to 8, having a sorbent feed pipe (15) connecting the reactor (1) to the flue gas path (2), a dust separator (4) arranged in the flue gas path downstream of the junction of the sorbent feed pipe (15), upstream of which dust separator (4) is connected, if required, a sorbent preseparator (3), which is connected downstream of the junction point of the sorbent in the flue gas path (2), characterized in that the reactor (1), in which the treatment of the sorbent takes place, contains a fluidized bed, the fluidizing medium for which is the steam for the treatment of the sorbent.

10. Apparatus according to Claim 9, characterized in that the fluidized-bed reactor (1) is preceded by an air-flushed star feeder (6'), via which the sorbent withdrawn from the flue gases can be fed to the fluidized-bed reactor (1) (Fig. 2).

11. Apparatus according to Claim 10, characterized in that, in the direction of flow of the flue gas, downstream of the junction point of the processed sorbent, a preseparator (3) for the sorbent is arranged at a higher level than the fluidized-bed reactor (1), in order to feed thereto sorbent separated off in the preseparator (3) utilizing gravity.

12. Apparatus according to Claim 10 or 11, characterized in that an outlet for used sorbent is arranged at the lowest point of the fluidized-bed reactor (1) (Fig. 2).

13. Apparatus according to one of Claims 9 to 12, characterized in that a contact cooler (19) is arranged in the flue gas pipe (2), in particular upstream of the point of introduction of the sorbent.

14. Apparatus according to Claim 13, characterized in that injection nozzles for cooling water are arranged in the flue gas pipe (2) between the contact cooler (19) and the point of introduction of the sorbent.

15. Apparatus according to Claim 14, characterized in that the injection nozzles are configured as two-material atomizer nozzles which can be impinged with water and, as second material, with steam or compressed air.

16. Apparatus according to one of Claims 9 to 14, characterized in that the steam, which is fed to the fluidized-bed reactor (1), in a connection pipe (15) between the fluidized-bed reactor (1) and the flue gas pipe (2), transports the sorbent processed in the fluidized-bed reactor (1) into the flue gas pipe (2).

**Revendications**

1. Procédé pour éliminer ou réduire la quantité de substances nocives gazeuses, en particulier $SO_2$, $SO_3$, HCl ou HF, dans les gaz de fumées par désorption chimique, un sorbant à granulométrie fine étant traité dans un réacteur avec de la vapeur d'eau, avant mise en contact avec les gaz de fumées, caractérisé en ce que le sorbant est placé avant entrée dans le réacteur à une température de préférence 10 à 50°C au-dessous de la température de point de rosée de la vapeur d'eau dans le réacteur et mis en contact avec la vapeur d'eau, par apport de vapeur d'eau sèche, dont la température ne dépasse pas de 60°C la température de point de rosée, de préférence de 10 à 40°C au-dessus de la température de point de rosée.

2. Procédé selon la revendication 1, caractérisé en ce que l'on utilise comme sorbant de la cendre provenant de centrale, contenant du calcium.

3. Procédé selon la revendication 1, caractérisé en ce que l'on utilise du charbon actif comme sorbant.

4. Procédé selon la revendication 1, caractérisé en ce que l'on utilise comme sorbant un matériau à porosité fine, susceptible de réagir avec la substance nocive.

5. Procédé selon l'une des revendications 1 à 4, caractérisé en ce que le sorbant solide, après avoir traité les gaz de fumées, en est séparé puis traité pour redevenir utilisable.

6. Procédé selon l'une quelconque des revendications 1 à 5, caractérisé en ce que le sorbant consommé est extrait du réacteur.

7. Procédé selon l'une des revendications 1 à 6, caractérisé en ce que le sorbant est refroidi dans le réacteur avant son entrée par une écluse.

8. Procédé selon l'une des revendications 1 à 7, caractérisé en ce que le point de rosée dans le réacteur (1) est augmenté au moyen d'une pression de vapeur d'eau élevée, ou diminué par dilution de la vapeur d'eau avec de l'air ou un gaz inerte.

9. Dispositif pour mettre en oeuvre le procédé selon l'une des revendications 1 à 8, avec une conduite de transfert de sorbant (15), reliant le réacteur (1) au parcours des gaz de fumées (2), un séparateur à poussières (4), disposé dans le parcours des gaz de fumées, après l'embouchure de la conduite de transfert de sorbant (15), séparateur en amont duquel est mis en circuit, le cas échéant, un préséparateur à sorbant (3), qui est mis en circuit en aval du point d'embouchure du sorbant dans le parcours de gaz de fumées (2), caractérisé en ce que le réacteur (1) dans lequel s'effectue le traitement du sorbant est un lit fluidisé, dont le milieu de fluidisation est la vapeur d'eau destinée au traitement du sorbant.

10. Dispositif selon la revendication 9, caractérisé en ce qu'un sas rotatif (6') balayé à l'air, par l'intermédiaire duquel on peut amener le sorbant extrait des gaz de fumées au réacteur à lit fluidisé (1) est mis en circuit en amont du réacteur à lit fluidisé (1) (figure 2).

11. Dispositif selon la revendication 10, caractérisé en ce qu'un préséparateur (3) destiné au sorbant est disposé en aval du point d'embouchure du sorbant traité, dans la direction d'écoulement des gaz de fumées, à un niveau supérieur à celui du réacteur à lit fluidisé (1), afin d'amener à celui-ci par gravité le sorbant ayant été séparé dans le préséparateur (3).

**12.** Dispositif selon la revendication 10 ou 11, caractérisé en ce qu'une évacuation pour le sorbant consommé est disposée au point le plus bas du réacteur à lit fluidisé (1).

**13.** Dispositif selon l'une des revendications 9 à 12, caractérisé en ce qu'un refroidisseur à contact (19) est disposé dans la conduite de gaz de fumées (2), en particulier avant le point d'introduction du sorbant.

**14.** Dispositif selon la revendication 13, caractérisé en ce que des buses d'injection pour de l'eau de refroidissement sont disposées dans la conduite de gaz de fumées (2), entre le refroidisseur à contact (19) et le point d'introduction du sorbant.

**15.** Dispositif selon la revendication 16, caractérisé en ce que les buses d'injection sont réalisées sous forme de buses de pulvérisation à deux composants, pouvant être alimentées à l'eau et, à titre de deuxième composant, avec de la vapeur ou de l'air comprimé.

**16.** Dispositif selon l'une des revendications 9 à 14, caractérisé en ce que la vapeur amenée au réacteur à lit fluidisé (1) assure le transfert dans la conduite de gaz de fumées (2) du sorbant ayant été préparé dans une conduite de liaison (15) entre le réacteur à lit fluidisé (1) et la conduite de gaz de fumées (2).

Fig.1

Fig. 2